# EUROPEAN PATENT SPECIFICATION

(11) **EP 3 950 484 B1**
(45) Date of publication and mention of the grant of the patent: **01.11.2023**
(21) Application number: 20790467.3
(22) Date of filing: 14.04.2020
(51) Int. Cl.: B62M 23/02, B62J 41/00

(54) **SERIES HYBRID TYPE STRADDLED VEHICLE**
SPREIZSITZFAHRZEUG VOM SERIENHYBRIDTYP
VÉHICULE À SELLE DE TYPE HYBRIDE EN SÉRIE

(30) Priority: 19.04.2019 JP 2019080268
(43) Date of publication of application: 09.02.2022
(73) Proprietor: Yamaha Hatsudoki Kabushiki Kaisha, Iwata-shi, Shizuoka 438-8501 (JP)
(72) Inventor: KANEKO, Kyohei, Iwata-shi, Shizuoka 438-8501 (JP); KITAMURA, Naoki, Iwata-shi, Shizuoka 438-8501 (JP); TAKEMOTO, Yasushi, Iwata-shi, Shizuoka 438-8501 (JP)
(74) Representative: Stöckeler, Ferdinand
(86) International application number: PCT/JP2020/016383
(87) International publication number: WO 2020/213590

(56) References cited:
- EP-A1- 1 707 484
- WO-A1-2013/098895
- JP-A- 2007 209 188
- JP-A- 2008 247 166
- JP-U- 3 159 814
- JP-U- 3 159 814
- US-A1- 2011 073 401

## Description

### Technical Field

The present teaching relates to a series hybrid type straddled vehicle.

### Background Art

Patent Literature 1 (PTL 1) shows a straddled vehicle including an electric power generation unit and a motor unit. The straddled vehicle according to PTL 1 is a vehicle of series hybrid type in which electric power generated by the electric power generation unit is supplied to the motor unit so that a driving wheel is driven. The vehicle of series hybrid type includes the electric power generation unit having an electric power generation engine that drives an electric power generator to generate electric power. The electric power generated by the electric power generator and/or electric power from a battery is/are supplied to a drive motor of the motor unit. The drive motor drives the driving wheel.

### Citation List

### Patent Literature

PTL 1: Japanese Patent Application Laid-Open No. 2006-347427

### Summary of Invention

### Technical Problem

It is required that a series hybrid type straddled vehicle like the one disclosed in PTL 1 is to be capable of cooling a drive motor down to an appropriate temperature, and also capable of allowing a cooling system used to cool the drive motor to be arranged with an increased degree of freedom. The document JP 3 159814 U discloses a series hybrid type straddled vehicle in accordance with the preamble of claim 1.

The present teaching aims to provide a series hybrid type straddled vehicle capable of cooling a drive motor down to an appropriate temperature, and capable of allowing a cooling system that is used to cool the drive motor to be arranged with an increased degree of freedom.

### Solution to the Problem

The inventors of the present teaching conducted studies on cooling of a series hybrid type straddled vehicle's drive motor.

A drive motor of a motor unit included in a series hybrid type straddled vehicle is supplied with electric power from at least either one of an electric power generator or a battery. In some cases, with this configuration, the drive motor of the series hybrid type straddled vehicle may be supplied with electric power from the battery alone. In such a case, the electric power generation unit of the series hybrid type straddled vehicle is not continuously generating electric power. Thus, an electric power generation engine of the series hybrid type straddled vehicle is not continuously driven. On the other hand, it is normal that the drive motor of the series hybrid type straddled vehicle is driven all the time while traveling. It is therefore required that the drive motor of the series hybrid type straddled vehicle is to be continuously cooled while traveling. Normally, a target temperature in motor cooling is lower than a target temperature in engine cooling.

In the series hybrid type straddled vehicle according to PTL 1, the drive motor is cooled with an air-cooling system. To air-cool the drive motor, a fan is provided, for example. The fan needs to be arranged such that an air stream from the fan can reach the drive motor. For this purpose, the fan is arranged at a position relatively close to the drive motor, for example. The fan may be directly attached to the drive motor, for example.

Normally, a series hybrid type straddled vehicle includes an electric power generator and a drive motor in addition to an electric power generation engine. The series hybrid type straddled vehicle may further include a battery. Thus, in general, two or more relatively large-sized devices are provided in the series hybrid type straddled vehicle. Characteristic requirements desired of the series hybrid type straddled vehicle itself are responsiveness, maneuverability, and agility in response to a driver's manipulation. It is therefore unlikely that a large installation space for the devices is to be provided in the series hybrid type straddled vehicle. When two or more relatively large-sized devices are provided in a limited space, the degree of freedom in arranging the devices is limited. Consequently, it is difficult to arrange a fan and the drive motor such that an air stream from the fan can sufficiently reach the drive motor while suppressing or preventing an increase in the entire size.

The inventors of the present teaching studied cooling of a drive motor with a water-cooling system so that the drive motor is cooled while traveling.

Adapting a water-cooling type cooling system requires a radiator. Especially in the series hybrid type straddled vehicle, it is required that the drive motor be continuously or substantially continuously cooled while traveling. This may require a size increase of the radiator. Water-cooling however allows the radiator to be arranged at a position far from the drive motor as a cooling object.

As the drive motor is driven, the series hybrid type straddled vehicle travels. Thus, the drive motor needs to be cooled while the series hybrid type straddled vehicle is traveling. Relative wind is generated when vehicles are in motion. The relative wind can be used to cool the radiator for the drive motor. In this case, a position at which the radiator is installed can be freely set as long as it is a position that can take impact of the relative wind. If a cooling system of the series hybrid type straddled vehicle is configured as described above, the cooling system can be arranged with a high degree of freedom. In addition, a motor unit of the series hybrid type straddled vehicle can be compact, which can increase the degree of design freedom. Since the drive motor can be continuously cooled while traveling, the drive motor can be continuously cooled down to a temperature suitable for a motor, the temperature being lower than a target temperature in cooling an electric power generation engine.

With this configuration, a compact cooling system can be installed in the series hybrid type straddled vehicle, the cooling system being capable of: continuously cooling the drive motor down to a target temperature; and being arranged with a high degree of freedom.

A series hybrid type straddled vehicle according to the present teaching accomplished based on the above-described findings has the following configuration.
(1) A series hybrid type straddled vehicle includes:
   a frame;
   an electric power generation unit including an electric power generation engine and an electric power generator, the electric power generation engine being supported by the frame, the electric power generator being driven by output from the electric power generation engine to generate electric power;
   a front wheel rotatably supported by a front suspension supported by the frame, the front wheel being provided such that rotational power from the electric power generation engine is not mechanically transmitted to the front wheel;
   a rear wheel rotatably supported by a rear arm supported by the frame, the rear wheel being rotatably provided such that rotational power from the electric power generation engine is not mechanically transmitted to the rear wheel, the rear wheel having its front end positioned more rearward than the rear end of the front wheel with respect to a forward direction of the series hybrid type straddled vehicle;
   a motor unit supported by the frame, the front suspension, or the rear arm, the motor unit including a drive motor that is supplied with electric power generated by the electric power generator to drive at least either one of the front wheel or the rear wheel as a driving wheel;
   a control unit including an inverter that controls electric power to be supplied from the electric power generator to the drive motor; and
   a non-supported electric motor radiator that cools the inverter and/or the drive motor for driving the driving wheel without mechanically receiving rotational power from the electric power generation engine, the non-supported electric motor radiator being arranged at such a position that at least a part of the non-supported electric motor radiator can take impact of relative wind when the series hybrid type straddled vehicle is in motion, the position being more rearward than the front end of the front wheel with respect to the forward direction.

The series hybrid type straddled vehicle according to (1) includes the frame, the electric power generation unit, the rear wheel, the front wheel, the motor unit, the control unit, and the non-supported electric motor radiator.

The electric power generation unit includes the electric power generation engine and the electric power generator. The electric power generation engine is supported by the frame. The electric power generator is driven by output from the electric power generation engine, to generate electric power. The front wheel is rotatably supported via the front suspension. The rear wheel is rotatably supported by the rear arm supported by the frame. The front wheel and the rear wheel are provided such that rotational power from the electric power generation engine is not mechanically transmitted to them. The front suspension is supported by the frame. An example of the front suspension can be a front fork. The front fork is rotatably supported by the frame. The rear arm is supported by the frame. The motor unit is supported by the frame, the rear arm, or the front suspension. The motor unit includes the drive motor that is supplied with electric power generated by the electric power generator, to drive at least either one of the front wheel or the rear wheel as the driving wheel. The control unit includes the inverter that controls electric power to be supplied from the electric power generator to the drive motor. The non-supported electric motor radiator is arranged at such a position that at least a part of the non-supported electric motor radiator can take impact of relative wind when the series hybrid type straddled vehicle is in motion, the position being more rearward than the front end of the front wheel with respect to the forward direction of the series hybrid type straddled vehicle.

In the series hybrid type straddled vehicle according to (1), it is only required that the non-supported electric motor radiator be arranged at such a position that at least a part of the non-supported electric motor radiator can take impact of relative wind when a vehicle body of the series hybrid type straddled vehicle is in motion. Arrangement of the non-supported electric motor radiator is less likely to be restricted by the position of the motor unit. The degree of freedom in arranging the non-supported electric motor radiator can be improved. Accordingly, the series hybrid type straddled vehicle according to (1) allows a cooling system to be arranged with a high degree of freedom. In addition, the motor unit can be designed compact.

It is demanded or preferred that the drive motor and/or the inverter of the series hybrid type straddled vehicle be continuously cooled while traveling. While traveling, relative wind is produced continuously or substantially continuously. The relative wind is, for example, an air stream that the vehicle body receives as the vehicle travels. The non-supported electric motor radiator is installed so as to continuously or substantially continuously receive relative wind while traveling. In the series hybrid type straddled vehicle according to (1), by using relative wind, the drive motor and/or the inverter can be continuously or substantially continuously cooled down to a temperature suitable for the drive motor and/or the inverter, the temperature being lower than a target temperature in cooling the electric power generation engine, for example.

Accordingly, the series hybrid type straddled vehicle according to (1) can provide a compact cooling system that can continuously or substantially continuously cool the drive motor and/or the inverter down to an appropriate temperature while traveling, and that can be arranged with a high degree of freedom.

In an aspect of the present teaching, the series hybrid type straddled vehicle can adopt the following configuration.

(2) The series hybrid type straddled vehicle according to (1) further includes a battery, and is configured such that
the control unit includes a converter that controls electric power to be supplied from the electric power generator to the battery and/or the drive motor, and
the non-supported electric motor radiator cools the electric power generator and/or the converter.

In the series hybrid type straddled vehicle according to (2), the non-supported electric motor radiator cools at least either one of the electric power generator or the converter that controls electric power to be supplied from the electric power generator to the battery and/or the drive motor. In the series hybrid type straddled vehicle according to (2), the non-supported electric motor radiator for cooling the drive motor and/or the inverter cools at least either one of the electric power generator or the converter. Accordingly, the series hybrid type straddled vehicle according to (2) can provide a compact cooling system that allows the non-supported electric motor radiator to efficiently cool an electrical part down to an appropriate temperature, and that can be arranged with a high degree of freedom.

In an aspect of the present teaching, the series hybrid type straddled vehicle can adopt the following configuration.

(3) The series hybrid type straddled vehicle according to (1) or (2) further includes an engine radiator that cools the electric power generation engine, the engine radiator being arranged at such a position that at least a part of the engine radiator can take impact of the relative wind, the position being more rearward than the front end of the front wheel with respect to the forward direction.

The series hybrid type straddled vehicle according to (3) includes the engine radiator that cools the electric power generation engine. In the series hybrid type straddled vehicle according to (3), the non-supported electric motor radiator and the engine radiator are arranged at such positions that at least parts of them can take impact of relative wind, the positions being more rearward than the front end of the front wheel with respect to the forward direction of the series hybrid type straddled vehicle. In the series hybrid type straddled vehicle according to (3), therefore, it is easy to continuously or substantially continuously cool the electric power generation engine down to a target temperature, too. In the series hybrid type straddled vehicle according to (3), it is not always necessary that a cooling system such as a fan is directly attached to the electric power generation engine. Therefore, the electric power generation unit can be downsized. Accordingly, in the series hybrid type straddled vehicle according to (3), the drive motor can be continuously cooled down to a target temperature suitable for a motor while traveling, and in addition a cooling system including an engine cooler can be arranged with an increased degree of freedom.

In an aspect of the present teaching, the series hybrid type straddled vehicle can adopt the following configuration.

(4) The series hybrid type straddled vehicle according to (3) is configured such that
the non-supported electric motor radiator has a larger cooling area than that of the engine radiator.

In the series hybrid type straddled vehicle according to (4), the non-supported electric motor radiator has a larger cooling area than that of the engine radiator. Accordingly, the series hybrid type straddled vehicle according to (4) can efficiently cool the motor unit for driving the driving wheel down to a temperature lower than target temperature in cooling the electric power generation engine, continuously or substantially continuously while traveling.

In an aspect of the present teaching, the series hybrid type straddled vehicle can adopt the following configuration.

(5) The series hybrid type straddled vehicle according to (3) or (4) is configured such that
the non-supported electric motor radiator and the engine radiator are arranged such that at least either one of at least a part of the non-supported electric motor radiator or at least a part of the engine radiator is positioned between a rear contour line of the front wheel and a front contour line of the frame when the series hybrid type straddled vehicle is viewed in a left-right direction.

In the series hybrid type straddled vehicle according to (5), at least either one of at least a part of the non-supported electric motor radiator or at least a part of the engine radiator is positioned between the rear contour line of the front wheel and the front contour line of the frame when the series hybrid type straddled vehicle is viewed in the vehicle width direction. Accordingly, in the series hybrid type straddled vehicle according to (5), the non-supported electric motor radiator and the engine radiator can be arranged at positions that can directly take impact of relative wind, so that the motor unit can be cooled efficiently.

In an aspect of the present teaching, the series hybrid type straddled vehicle can adopt the following configuration.

(6) The series hybrid type straddled vehicle according to any one of (3) to (5) is configured such that
the non-supported electric motor radiator and the engine radiator are arranged such that both a cooling surface included in the non-supported electric motor radiator and a cooling surface included in the engine radiator intersect with a plane where its normal extends in a front-back direction of the series hybrid type straddled vehicle.

In the series hybrid type straddled vehicle according to (6), the cooling surface included in the non-supported electric motor radiator and the cooling surface included in the engine radiator intersect with a plane where its normal extends in the front-back direction of the vehicle body of the series hybrid type straddled vehicle. Accordingly, in the series hybrid type straddled vehicle according to (6), the non-supported electric motor radiator and the engine radiator can be arranged at positions that can directly take impact of relative wind in the vehicle body of the series hybrid type straddled vehicle, with a suppressed air resistance. Thus, in the series hybrid type straddled vehicle according to (6), the motor unit can be cooled efficiently. A cooling surface of a radiator is a surface that receives an air stream for cooling. The air stream for cooling is, for example, relative wind. In other words, the cooling surface is a surface of a portion related to a cooling function. An outer frame and the like are not included in the cooling surface. Here, the cooling area of a radiator means the heat dissipation area of the radiator. The cooling area of the radiator increases as the area of the cooling surface as viewed in a normal direction in which the normal of the cooling surface extends (the direction in which relative wind flows toward the cooling surface) increases, for example. The cooling area of the radiator increases as the thickness of the radiator in the normal direction increases. That is, the area of the cooling surface is different from the cooling area (heat dissipation area) of the radiator.

In an aspect of the present teaching, the series hybrid type straddled vehicle can adopt the following configuration.

(7) The series hybrid type straddled vehicle according to any one of (1) to (6) further includes
a duct that guides the relative wind to the non-supported electric motor radiator.

In the series hybrid type straddled vehicle according to (7), the duct provided in the series hybrid type straddled vehicle guides relative wind to the non-supported electric motor radiator. In the series hybrid type straddled vehicle according to (7), therefore, it is possible that the non-supported electric motor radiator is arranged at a position behind the wheel or the front suspension in a front view of the series hybrid type straddled vehicle for example, because the position can take impact of relative wind via the duct when the vehicle body is in motion. Accordingly, in the series hybrid type straddled vehicle according to (7), the motor unit can be cooled efficiently.

The terminology used herein is for defining particular embodiments only and is not intended to be limiting the teaching. As used herein, the term "and/or" includes any and all combinations of one or more of the associated listed items. As used herein, the terms "including", "comprising", or "having", and variations thereof specify the presence of stated features, steps, elements, components, and/or equivalents thereof, and can include one or more of steps, operations, elements, components, and/or their groups. As used herein, the terms "attached", "connected", "coupled", and/or equivalents thereof are used in a broad sense, and include both of direct and indirect attachment and coupling unless otherwise specified. The terms "connected" and "coupled" are not limited to physical or mechanical connection or coupling, and can include direct and indirect electrical connection and coupling. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present teaching and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. The present disclosure is to be considered as an exemplification of the present teaching, and is not intended to limit the present teaching to the specific embodiments illustrated by drawings or descriptions below.

The series hybrid type straddled vehicle (straddled vehicle) refers to a vehicle of a type including a saddle on which a driver can sit astride. Examples of the series hybrid type straddled vehicle encompass a scooter type motorcycle, a moped type motorcycle, an off-road type motorcycle, and an on-road type motorcycle. The series hybrid type straddled vehicle is not limited to motorcycles. Alternatively, for example, the series hybrid type straddled vehicle may be a three-wheeled motor vehicle, an all-terrain vehicle (ATV), or the like. The three-wheeled motor vehicle may include two front wheels and one rear wheel. Alternatively, the three-wheeled motor vehicle may include one front wheel and two rear wheels. The driving wheel of the series hybrid type straddled vehicle may be either a rear wheel or a front wheel. Alternatively, both the rear wheel and the front wheel may serve as driving wheels of the series hybrid type straddled vehicle.

The series hybrid type straddled vehicle is preferably capable of making a turn in a leaning posture. The series hybrid type straddled vehicle capable of making a turn in a leaning posture is configured to make a turn while leaning toward the inside of a curve. With this, the series hybrid type straddled vehicle capable of making a turn in a leaning posture can resist against a centrifugal force acting on the series hybrid type straddled vehicle during a turn. The series hybrid type straddled vehicle capable of making a turn in a leaning posture may be a motorcycle or a three-wheeled motor vehicle, for example. Since the series hybrid type straddled vehicle capable of making a turn in a leaning posture is required to have agility, the responsiveness of running to a manipulation for starting is highly valued.

In the series hybrid type straddled vehicle, the driving wheel is driven by power that is outputted from the drive motor. The driving wheel is separated from a path through which rotational power from the crankshaft is transmitted. Therefore, the driving wheel is configured such that power outputted by the electric power generation engine is not mechanically transmitted to the driving wheel. That is, the series hybrid type straddled vehicle in the present disclosure does not encompass a so-called series-parallel hybrid type straddled vehicle.

The frame is a part that serves as a base for supporting main parts of the series hybrid type straddled vehicle for example, and that constitutes a framework of the series hybrid type straddled vehicle. The frame bears loads from the front wheel, the rear wheel, and the electric power generation engine of the series hybrid type straddled vehicle. The frame may be composed of a combination of two or more rigid parts.

The electric power generation engine is a reciprocating engine that generates power by gas combustion, and outputs the power in the form of a torque and a rotation speed of the crankshaft. The electric power generation engine encompasses, for example, a single cylinder engine and an engine having two or more cylinders. Non-limiting examples of the electric power generation engine include a rotary engine and a gas turbine engine in addition to the reciprocating engine that generates power by gas combustion, and outputs the power in the form of a torque and a rotation speed of the crankshaft.

The electric power generator is a rotating electric machine capable of generating electric power. The electric power generator may be a rotating electric machine different from a starter motor. The electric power generator may be either of an outer rotor type or of an inner rotor type. The electric power generator may be either of a radial gap type or of an axial gap type. In an embodiment, the electric power generator has a rotor including a permanent magnet.

The motor unit is a part that receives electric power supplied from the electric power generator, and outputs it as rotational power. The motor unit includes the drive motor. The motor unit may include a speed reducer, a drive sprocket for a chain, or a pulley for a chain belt, in addition to the drive motor. The motor unit is supported by the frame, for example. The motor unit may be supported by the rear arm, for example. In a case of the motor unit being supported by the rear arm, it may be possible that a speed reducer is incorporated in the rear arm, for example. In a case of the motor unit being supported by the rear arm, it may be possible that an output shaft of the drive motor is directly connected to a center shaft of the rear wheel without interposition of a speed reducer. The motor unit may be supported by the front suspension, for example. In a case of the motor unit being supported by the front suspension, it may be possible that the output shaft of the drive motor is directly connected to a center shaft of the front wheel without interposition of a speed reducer.

The drive motor is a rotating electric machine capable of motor operations. The drive motor may be a rotating electric machine capable of both electric power generation and motor operations, for example. The drive motor may be either of outer rotor type or inner rotor type. The drive motor may be either of radial gap type or axial gap type. In an embodiment, the drive motor has a rotor including a permanent magnet.

The non-supported (unsupported) electric motor is a motor that outputs power independently. The non-supported electric motor is not a motor that directly provides assistance to power outputted by the engine, and is a motor that is not directly assisted with power outputted by the engine. The non-supported electric motor is a drive motor, for example. More specifically, the non-supported electric motor is the drive motor of the series hybrid type straddled vehicle. Here, the non-supported electric motor may be driven by electric power that is outputted from the electric power generator driven by the electric power generation engine. The non-supported electric motor may receive a rotational force transmitted from the driving wheel, to generate electric power.

The driving wheel may be either the rear wheel or the front wheel. Alternatively, both the rear wheel and the front wheel may serve as driving wheels.

The front suspension is a part that connects the front wheel to a frame structure. The front suspension rotatably supports the front wheel. The front fork, which is an example of the front suspension, is rotatably supported by the frame structure. The front suspension includes a damper. The damper absorbs vibration and/or shock given from the front wheel.

The radiator is a heat exchanger for dissipating heat of a coolant. The radiator may have a cooling fan that cools the radiator when traveling of the series hybrid type straddled vehicle stops. Here, if the radiator is arranged at a position that can take impact of relative wind, the radiator takes impact of relative wind even while the cooling fan is stopped, as long as the series hybrid type straddled vehicle is traveling. That is, the position that can take impact of relative wind is a position that can take impact of an air stream even while the cooling fan is stopped, as long as the series hybrid type straddled vehicle is traveling.

A position that can no longer take impact of an air stream if the cooling fan is stopped is not included in the position that can take impact of relative wind. The position that can take impact of relative wind is not limited to a visible position in a front view of the series hybrid type straddled vehicle. For example, the position that can take impact of relative wind may be a position more rearward than the front wheel or suspension in a front view of the straddled vehicle. It should be noted that the position that can take impact of relative wind is such a position that a space for having an air stream pass therethrough is provided more frontward than the position in the front-back direction. The position that can take impact of relative wind is preferably a position that receives a relative wind pressure while the series hybrid type straddled vehicle is traveling.

The non-supported electric motor radiator is a radiator that cools the non-supported electric motor. Therefore, the non-supported electric motor radiator is a radiator that cools the drive motor. Here, the non-supported electric motor radiator may cool an electrical part other than the non-supported electric motor. For example, the non-supported electric motor radiator may cool the inverter that controls the non-supported electric motor, the electric power generator, and the converter that controls the electric power generator.

The wording "supporting" means that a supporting part bears a load of a supported part. The wording "supported" means that a supported part applies a load to a supporting part. A contact point between the supporting part and the supported part may be fixed, for example. The supporting part and the supported part may be connected swingably, for example. The supporting part and the supported part may be connected rotatably, for example. A connecting portion between the supporting part and the supported part may be where the parts are directly connected to each other. The connecting portion between the supporting part and the supported part may be where the parts are connected to each other via an elastic member, a link mechanism, or the like, for example.

### Advantageous Effects of Invention

According to the present teaching, a series hybrid type straddled vehicle can be provided, including a drive motor cooling system capable of: continuously cooling a drive motor down to a target temperature; being arranged with a high degree of freedom; and being compact.

### Brief Description of Drawings

[FIG. 1] A diagram showing an external appearance of a series hybrid type straddled vehicle according to a not claimed first embodiment of the present teaching
[FIG. 2] A diagram showing an external appearance of a series hybrid type straddled vehicle according to a not claimed second embodiment of the present teaching
[FIG. 3] A diagram showing an external appearance of a series hybrid type straddled vehicle according to a not claimed third embodiment of the present teaching
[FIG. 4] A diagram showing an external appearance of a series hybrid type straddled vehicle according to a fourth embodiment of the present teaching
[FIG. 5] A diagram showing an external appearance of a series hybrid type straddled vehicle according to a fifth embodiment of the present teaching
[FIG. 6] A diagram showing an external appearance of a series hybrid type straddled vehicle according to a sixth embodiment of the present teaching
[FIG. 7] A diagram showing an external appearance of a series hybrid type straddled vehicle according to a not claimed seventh embodiment of the present teaching
[FIG. 8] A diagram showing an external appearance of a series hybrid type straddled vehicle according to a not claimed eighth embodiment of the present teaching
[FIG. 9] A diagram showing an external appearance of a series hybrid type straddled vehicle according to a ninth embodiment of the present teaching
[FIG. 10] A diagram showing an external appearance of a series hybrid type straddled vehicle according to a tenth embodiment of the present teaching

### Description of Embodiments

In the following, the present teaching will be described based on preferred embodiments with reference to the drawings.

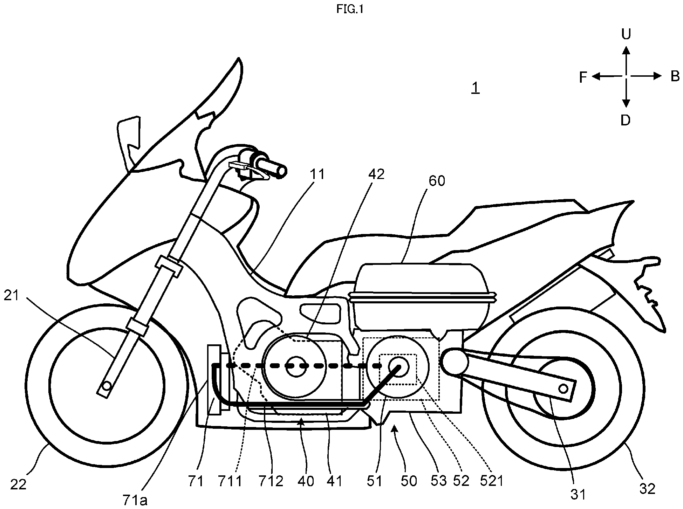

A not claimed first embodiment. A not claimed first embodiment will be described. FIG. 1 is a diagram showing an external appearance of a series hybrid type straddled vehicle 1 according to the not claimed first embodiment of the present teaching. FIG. 1 shows a state where a left one of vehicle body coverings in the left-right direction of the series hybrid type straddled vehicle 1 is removed. Referring to FIG. 1, overview of the series hybrid type straddled vehicle 1 according to this not claimed embodiment will be described.

In FIG. 1, the arrow F represents the frontward direction of the series hybrid type straddled vehicle 1. The frontward direction is a direction in which the series hybrid type straddled vehicle 1 travels. The arrow B represents the backward (rearward) direction. The arrow F and the arrow B represent the front-back (front-rear) direction FB of the series hybrid type straddled vehicle 1. The frontward direction F, the backward direction B, and the front-back direction FB are parallel to a horizontal plane under a state where the series hybrid type straddled vehicle 1 is upright. The arrow U represents the upward (upper) direction. The arrow D represents the downward (lower) direction. The arrow U and the arrow D represent the up-down direction UD of the series hybrid type straddled vehicle 1. The upward direction U, the downward direction D, and the up-down direction UD are parallel to the vertical direction under a state where the series hybrid type straddled vehicle 1 is upright.

In Description herein, directions in relation to a device included in the series hybrid type straddled vehicle 1 are described by using the foregoing directions, assuming a state where the device is mounted to the series hybrid type straddled vehicle 1.

In the series hybrid type straddled vehicle 1 (hereinafter, referred to as the straddled vehicle 1) according to this not claimed embodiment, an electric power generator is driven by an electric power generation engine, and a driving wheel is driven by electric power of the electric power generator.

The straddled vehicle 1 shown in FIG. 1 includes a frame 11. The frame 11 constitutes a framework of the straddled vehicle 1, and serves as a base for supporting mounted parts of the straddled vehicle 1.

The straddled vehicle 1 includes a front fork 21 and a front wheel 22. The front wheel 22 is rotatably supported by the front fork 21. The front fork 21 is rotatably supported by the frame 11. The front fork 21 is an example of a front suspension. That is, the front suspension supports the front wheel 22 rotatably, and is supported by the frame 11.

The straddled vehicle 1 includes a rear arm 31 and a rear wheel 32. The rear wheel 32 is rotatably supported by the rear arm 31. The front end of the rear wheel 32 is positioned farther in the rearward direction than the rear end of the front wheel 22.

The straddled vehicle 1 includes an electric power generation unit 40. The electric power generation unit 40 includes an electric power generation engine 41 and an electric power generator 42.

The electric power generation unit 40 is separate from a motor unit 50. The electric power generation unit 40 is supported by at least one of the frame 11 or the motor unit 50.

The electric power generation engine 41 has a rotatable crankshaft (not shown). The electric power generation engine 41 generates power by gas combustion, and outputs the power in the form of a torque and a rotation speed of the crankshaft. The power (rotational power) outputted by the electric power generation engine 41 is engine power. The engine power (rotational power) outputted by the electric power generation engine 41, however, is not mechanically transmitted to the front wheel 22 and to the rear wheel 32.

The electric power generator 42 is provided so as to interlock with the crankshaft. The electric power generator 42 is driven by the output from the electric power generation engine 41, to generate electric power, and supplies the generated electric power to a drive motor 51.

The straddled vehicle 1 includes the motor unit 50. The motor unit 50 includes the drive motor 51 and a gear box 53.

The drive motor 51 receives electric power supplied from the electric power generation unit 40, to output power so that the rear wheel 32 is driven by the outputted power. The rear wheel 32 is driven only by the power outputted from the drive motor, without mechanically receiving rotational power from the electric power generation engine 41. In this not claimed embodiment, the rear wheel 32 is a driving wheel. The drive motor 51 is not an electric motor that is assisted with mechanical power outputted from an engine. Therefore, the drive motor 51 is a non-supported electric motor. The drive motor 51 does not assist the engine 41, either.

The gear box 53 shifts the speed of power outputted from the drive motor 51 with a predetermined gear ratio, and transmits the resulting power to the rear wheel 32 serving as the driving wheel. The gear box 53 is rigidly fixed to the frame 11, and supports the rear arm 31 swingably.

The motor unit 50 is fixed to the frame 11. The motor unit 50 supports the rear arm 31 swingably. The motor unit 50 and the frame 11 integrally bear a load from the front wheel 22 via the front fork 21, and bear a load from the rear wheel 32 via the rear arm 31.

The straddled vehicle 1 includes a control unit 52. The control unit 52 includes an inverter 521. The inverter 521 controls electric power to be supplied from the electric power generation unit 40 to the drive motor 51.

The straddled vehicle 1 includes a battery 60. The battery 60 accumulates at least part of electric power generated by the electric power generator 42, and is electrically connected to the drive motor 51 such that the accumulated electric power can be supplied to the drive motor 51.

The straddled vehicle 1 includes a non-supported electric motor radiator 71. The non-supported electric motor radiator 71 is a radiator for cooling the drive motor 51 of the motor unit 50, which is a non-supported electric motor, and/or the inverter 521 of the control unit 52 of the straddled vehicle 1. The drive motor 51 and/or the inverter 521 of the straddled vehicle 1 is/are of water-cooled type. The non-supported electric motor radiator 71 is arranged at a position that can take impact of relative wind when the straddled vehicle 1 is in motion, the position being more rearward B than the front end of the front wheel 22 in the front-back direction FB or the forward direction of the straddled vehicle 1. The non-supported electric motor radiator 71 has a cooling surface 71a. The non-supported electric motor radiator 71 is arranged such that the cooling surface 71a receives relative wind.

The non-supported electric motor radiator 71 is connected to the control unit 52 and to the motor unit 50 via a coolant hose 711, so that the non-supported electric motor radiator 71 supplies a coolant to the inverter 521 and the drive motor 51. The motor unit 50 is connected to the non-supported electric motor radiator 71 via a coolant hose 712, so that the drive motor 51 supplies a coolant to the non-supported electric motor radiator 71. The coolant returns to the non-supported electric motor radiator 71, and then is cooled again.

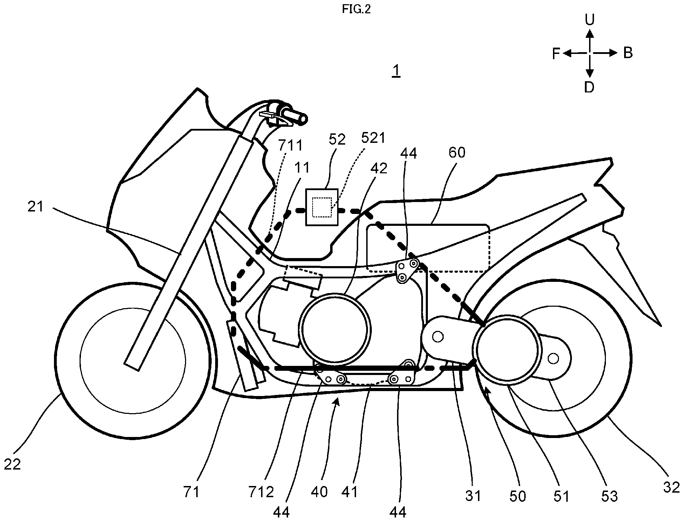

A not claimed second embodiment A second not claimed embodiment will be described. The second not claimed embodiment is different from the first not claimed embodiment in terms of how an electric power generation unit 40 and a motor unit 50 are arranged and how a rear arm 31 is supported. FIG. 2 is a diagram showing an external appearance of a straddled vehicle 1 according to the second embodiment of the present teaching. FIG. 2 shows the straddled vehicle 1 from which a left one of vehicle body coverings in the left-right direction is removed. Differences from the first embodiment will be described below.

In this not claimed embodiment, a gear box 53 of a motor unit 50 constitutes a rear arm 31. A drive motor 51 is fixed to the gear box 53, which constitutes the rear arm 31. A frame 11 supports the rear arm 31 swingably. The frame 11 bears a load from a front wheel 22 via a front fork 21, and bears a load from a rear wheel 32 via the rear arm 31. An electric power generation unit 40 of this not claimed embodiment is supported by the frame 11. The electric power generation unit 40 is supported by the frame 11 via a fixture 44 including a link member and an elastic member such as a rubber bush.

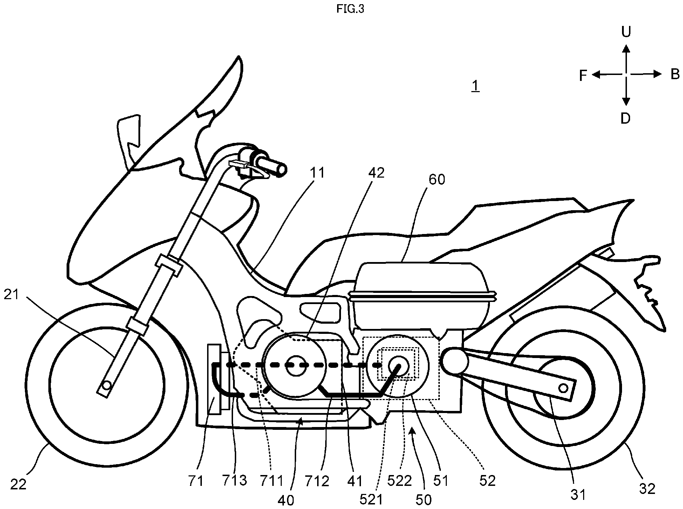

A third not claimed embodiment. A third not claimed embodiment will be described. The third not claimed embodiment is identical to the not claimed first embodiment or the second embodiment, except that a non-supported electric motor radiator 71 is configured to further cool at least either one of an electric power generator or a converter of a control unit. FIG. 3 is a diagram showing an external appearance of a straddled vehicle 1 according to the third embodiment of the present teaching. FIG. 3 shows the straddled vehicle 1 from which a left one of vehicle body coverings in the left-right direction is removed. Differences from the first embodiment or the second embodiment will be described below.

A control unit 52 includes a converter 522. The converter 522 controls electric power to be supplied from an electric power generator 42 of an electric power generation unit 40 to a battery 60 and/or to a drive motor 51.

The non-supported electric motor radiator 71 cools not only the drive motor 51 of a motor unit 50 and/or an inverter 521 of the control unit 52 but also the electric power generator 42 of the electric power generation unit 40 and/or the converter 522 of the control unit 52. The non-supported electric motor radiator 71 is connected to the motor unit 50 via a coolant hose 711, so that the non-supported electric motor radiator 71 supplies a coolant to the control unit 52 and the drive motor 51 in the motor unit 50. The motor unit 50 is connected to the electric power generator 42 via a coolant hose 712, so that the motor unit 50 supplies a coolant to the electric power generator 42. The electric power generator 42 is connected to the non-supported electric motor radiator 71 via a coolant hose 713, so that the electric power generator 42 supplies a coolant to the non-supported electric motor radiator 71. The coolant returns to the non-supported electric motor radiator 71, and then is cooled again. In this not claimed embodiment, the water temperature of the non-supported electric motor radiator 71 is set at 60°C.

### [Fourth Embodiment]

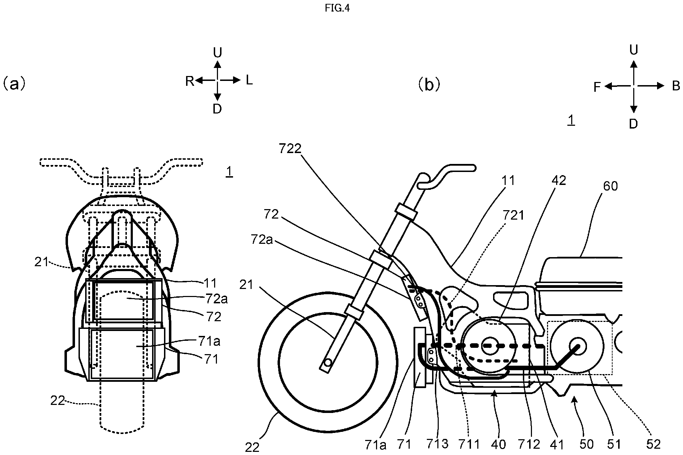

A fourth embodiment will be described. The fourth embodiment is identical to any of the not claimed first to third embodiments, except that an engine radiator is additionally provided. FIG. 4 is a diagram showing an external appearance of a straddled vehicle 1 according to the fourth embodiment of the present teaching. FIG. 4(a) is a front view of the straddled vehicle 1, and FIG. 4(b) is a left side view of the straddled vehicle 1. In FIG. 4(a), for descriptive purposes, a front fork and a front wheel are illustrated with broken lines. FIG. 4(a) and FIG. 4(b) show the straddled vehicle 1 from which a vehicle body covering is removed.

In FIG. 4(a), the arrow R and the arrow L represent the right direction and the left direction from the perspective of a rider riding on a lean vehicle. The arrow L and the arrow R represent the left-right direction LR of the straddled vehicle 1. Differences from any of the not claimed first to third embodiments will be described below.

The straddled vehicle 1 includes an engine radiator 72. The engine radiator 72 is a radiator for cooling an electric power generation engine 41 of the straddled vehicle 1. Since the straddled vehicle 1 includes the engine radiator 72 for cooling the electric power generation engine 41, the electric power generation engine 41 of the straddled vehicle 1 is of water-cooled type. The engine radiator 72 is arranged at a position that can take impact of relative wind when the straddled vehicle 1 is in motion, the position being more rearward than the front end of the front wheel 22 with respect to the forward direction of the straddled vehicle 1. The engine radiator 72 has a cooling surface 72a. The engine radiator 72 is arranged such that the cooling surface 72a receives relative wind.
The engine radiator 72 is connected to the electric power generation engine 41 via a coolant hose 721, so that the engine radiator 72 supplies a coolant to the electric power generation engine 41. The electric power generation engine 41 is connected to the engine radiator 72 via a coolant hose 722, so that the electric power generation engine 41 supplies a coolant to the engine radiator 72. The coolant returns to the engine radiator 72, and then is cooled again. In this embodiment, the water temperature of the engine radiator 72 is set at 80°C.

A drive motor 51 of the straddled vehicle 1, which is a series hybrid type straddled vehicle, is driven all the time while traveling. A non-supported electric motor radiator 71, therefore, needs to be cooled all the time while traveling. Thus, the non-supported electric motor radiator 71 is arranged such that a cooling surface 71a of the non-supported electric motor radiator 71 receives relative wind when the straddled vehicle 1 is in motion.

In this embodiment, the water temperature of the non-supported electric motor radiator 71 is set at 60°C, which is lower than the water temperature of the engine radiator 72. As the water temperature of a radiator is lowered, a difference between the water temperature of the radiator and the outside air temperature is reduced, which deteriorates the cooling efficiency of the radiator. To lower the water temperature of the radiator, therefore, it is required that the cooling area of the radiator be increased. Thus, the non-supported electric motor radiator 71 has a larger cooling area than that of the engine radiator 72 in which water temperature is higher than the water temperature of the non-supported electric motor radiator 71. The area of the cooling surface 71a is larger than the area of the cooling surface 72a. This allows the non-supported electric motor radiator 71 to have a water temperature lower than the water temperature of the engine radiator 72. Accordingly, the non-supported electric motor radiator 71 is compatible with a motor unit 50 having a lower target temperature.

Here, arrangement of the non-supported electric motor radiator 71 and the engine radiator 72 in the straddled vehicle 1 will be described. Referring to FIG. 4(a), when the straddled vehicle 1 is viewed in the front-back direction FB, the non-supported electric motor radiator 71 and the engine radiator 72 are arranged in an edge portion located more rearward B than the front wheel 22, the edge portion constituting a front contour line of a frame 11. In this state, the non-supported electric motor radiator 71 and the engine radiator 72 are arranged one above the other in the up-down direction UD, with the non-supported electric motor radiator 71 being arranged farther in the downward direction D than the engine radiator 72. Both the non-supported electric motor radiator 71 and the engine radiator 72 are longer in the left-right direction LR than in the up-down direction UD. Referring to FIG. 4(b), when the straddled vehicle 1 is viewed in the left-right direction LR, at least either one of at least a part of the non-supported electric motor radiator 71 or at least a part of the engine radiator 72 is disposed between a rear contour line of the front wheel 22 and the front contour line of the frame 11. In this state, the non-supported electric motor radiator 71 and the engine radiator 72 are arranged with their respective cooling surfaces facing toward the forward direction (front direction F) of the straddled vehicle 1.

Such arrangement of the non-supported electric motor radiator 71 and the engine radiator 72 allows them to be arranged in a narrow space between the front wheel 22 and the frame 11 of the straddled vehicle 1. Moreover, the non-supported electric motor radiator 71, which needs to be cooled more, can be preferentially arranged in a lower portion of the straddled vehicle, where the non-supported electric motor radiator 71 is more likely to take impact of relative wind.

### [Fifth Embodiment]

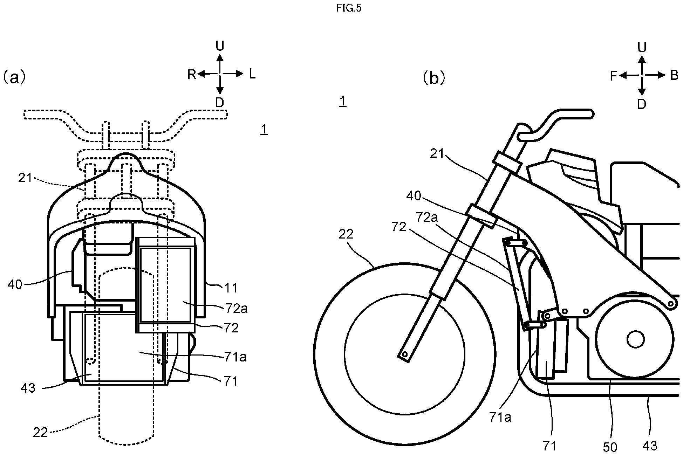

A fifth embodiment will be described. In the fifth embodiment, the positions at which the non-supported electric motor radiator and the engine radiator of the fourth embodiment are arranged are changed as follows. FIG. 5 is a diagram showing an external appearance of a straddled vehicle 1 according to the fifth embodiment of the present teaching. FIG. 5(a) is a front view of the straddled vehicle 1, and FIG. 5(b) is a left side view of the straddled vehicle 1. In FIG. 5(a), for descriptive purposes, a front fork and a front wheel are illustrated with broken lines. FIG. 5(a) and FIG. 5(b) show the straddled vehicle 1 from which a vehicle body covering is removed. Differences from the fourth embodiment will be described below.

Referring to FIG. 5(a), when the straddled vehicle 1 is viewed in the front-back direction FB, a non-supported electric motor radiator 71 and an engine radiator 72 are arranged in an edge portion located more rearward B than a front wheel 22, the edge portion constituting a front contour line of a frame 11. The non-supported electric motor radiator 71 has a cooling surface 71a. The non-supported electric motor radiator 71 is arranged such that the cooling surface 71a receives relative wind. The engine radiator 72 has a cooling surface 72a. The engine radiator 72 is arranged such that the cooling surface 72a receives relative wind. In this state, the non-supported electric motor radiator 71 and the engine radiator 72 are arranged one above the other in the up-down direction UD, with the non-supported electric motor radiator 71 being arranged farther in the downward direction D than the engine radiator 72. The non-supported electric motor radiator 71 is longer in the left-right direction LR than in the up-down direction UD. The engine radiator 72 is shorter in the left-right direction LR than in the up-down direction UD. The engine radiator 72 is arranged such that the center line of the engine radiator 72 is off-set from the center line of the straddled vehicle 1, the center line of the engine radiator 72 extending in the vertical direction through the center of the engine radiator 72 in the left-right direction LR. Referring to FIG. 5(b), when the straddled vehicle 1 is viewed in the left-right direction LR, at least either one of at least a part of the non-supported electric motor radiator 71 or at least a part of the engine radiator 72 is disposed between a rear contour line of the front wheel 22 and the front contour line of the frame 11. The cooling surface 71a is larger than the cooling surface 72a.

Such arrangement of the non-supported electric motor radiator 71 and the engine radiator 72 allows the non-supported electric motor radiator 71, which needs to be cooled more, to be preferentially arranged in a lower portion of the straddled vehicle, where the non-supported electric motor radiator 71 is more likely to take impact of relative wind. Moreover, the engine radiator 72 can be arranged so as to avoid an exhaust pipe 43 extending from the electric power generation engine 41.

### [Sixth Embodiment]

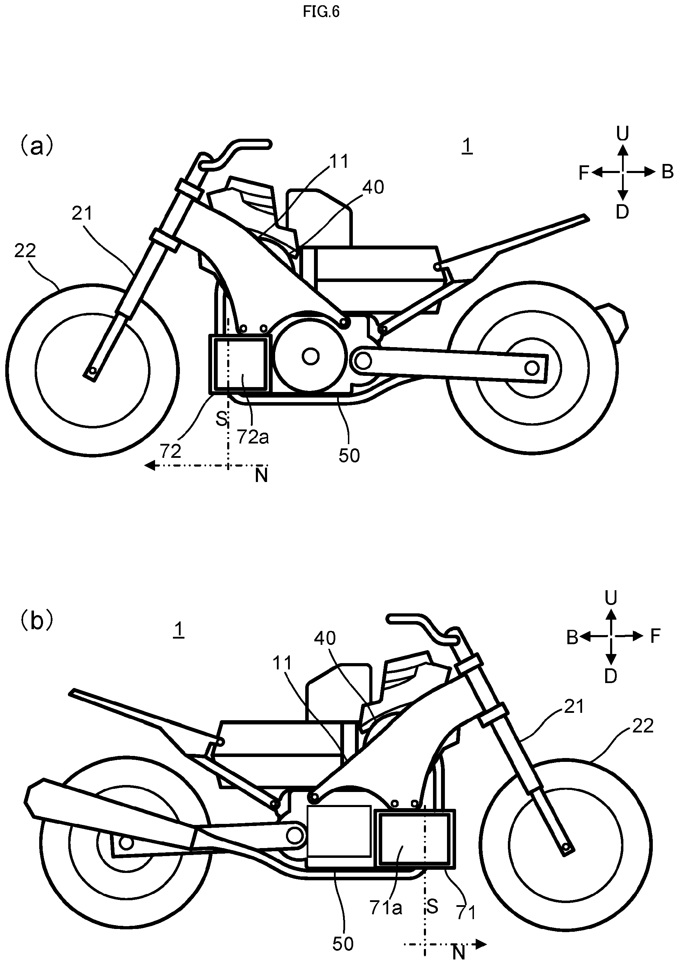

A sixth embodiment will be described. In the sixth embodiment, the positions at which the non-supported electric motor radiator and the engine radiator of the fourth embodiment are arranged are changed as follows. FIG. 6 is a diagram showing an external appearance of a straddled vehicle 1 according to the sixth embodiment of the present teaching. FIG. 6(a) is a left side view of the straddled vehicle 1, and FIG. 6(b) is a right side view of the straddled vehicle 1. FIG. 6(a) and FIG. 6(b) show the straddled vehicle 1 from which a vehicle body covering is removed. Differences from the fourth embodiment will be described below.

Referring to FIG. 6(b), a non-supported electric motor radiator 71 is arranged such that a cooling surface 71a of the non-supported electric motor radiator 71 intersects with a plane S where its normal is a straight line N extending in the front-back direction FB of the straddled vehicle 1. The left-right direction LR of the straddled vehicle 1 is composed of a first direction and a second direction opposite to the first direction, and the non-supported electric motor radiator 71 is arranged along a surface of a vehicle body of the straddled vehicle 1, the surface facing toward the first direction in the left-right direction LR. More specifically, the non-supported electric motor radiator 71 is arranged along the surface of the straddled vehicle 1 facing toward the right direction R in the left-right direction LR of the straddled vehicle 1. The cooling surface 71a faces toward the right direction R. Referring to FIG. 6(a), an engine radiator 72 is arranged such that a cooling surface 72a of the engine radiator 72 intersects with the plane S where its normal is the straight line N extending in the front-back direction FB of the straddled vehicle 1. The engine radiator 72 is arranged along a surface of the vehicle body of the straddled vehicle 1, the surface facing toward the second direction in the left-right direction LR. More specifically, the engine radiator 72 is arranged along the surface of the straddled vehicle 1 facing toward the left direction L in the left-right direction LR of the straddled vehicle 1. The cooling surface 72a faces toward the left direction L. The cooling surface 71a is larger than the cooling surface 72a.

Such arrangement of the non-supported electric motor radiator 71 and the engine radiator 72 allows the non-supported electric motor radiator 71 and the engine radiator 72 to be arranged at positions, in the vehicle body of the straddled vehicle 1, that can directly take impact of relative wind. Moreover, the non-supported electric motor radiator 71 and the engine radiator 72 can efficiently cool the motor unit 50 and the electric power generation engine 41.

### [Seventh not claimed Embodiment]

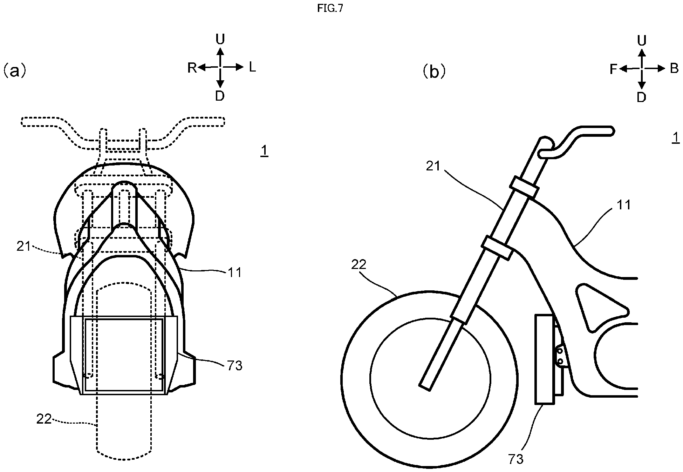

A seventh embodiment that is not claimed will be described. In the not claimed seventh embodiment, the positions at which the non-supported electric motor radiator and the engine radiator of the fourth embodiment are arranged are changed as follows. FIG. 7 is a diagram showing an external appearance of a straddled vehicle 1 according to the not claimed seventh embodiment of the present teaching. FIG. 7(a) is a front view of the straddled vehicle 1, and FIG. 7(b) is a left side view of the straddled vehicle 1. In FIG. 7(a), for descriptive purposes, a front fork and a front wheel are illustrated with broken lines. FIG. 7(a) and FIG. 7(b) show the straddled vehicle 1 from which a vehicle body covering is removed. Differences from the fourth embodiment will be described below.

In this not claimed embodiment, a non-supported electric motor radiator 71 and an engine radiator 72 of the straddled vehicle 1 can be configured as a single radiator 73. Referring to FIG. 7(a), when the straddled vehicle 1 is viewed in the front-back direction FB, the radiator 73 is arranged in an edge portion located more rearward B than a front wheel 22, the edge portion constituting a front contour line of a frame 11. Referring to FIG. 7(b), when the straddled vehicle 1 is viewed in the left-right direction LR, at least a part of the radiator 73 is disposed between a rear contour line of the front wheel 22 and the front contour line of the frame 11. In this state, the radiator 73 is arranged with its cooling surface facing toward the forward direction (frontward direction F) of the straddled vehicle 1.

In this variation, a coolant from the radiator 73 cools a motor unit 50 and an electric power generator 42, then is supplied to an electric power generation engine 41 to cool the electric power generation engine 41, and then returns to the radiator 73 again.

Such arrangement of the radiator 73 allows the radiator 73 to be arranged in a narrow space between the front wheel 22 and the frame 11 of the straddled vehicle 1. Moreover, the number of parts of a cooling system can be reduced so that the cooling system can be simplified, because the non-supported electric motor radiator 71 and the engine radiator 72 illustrated in FIG. 4 for example are configured as the single radiator 73.

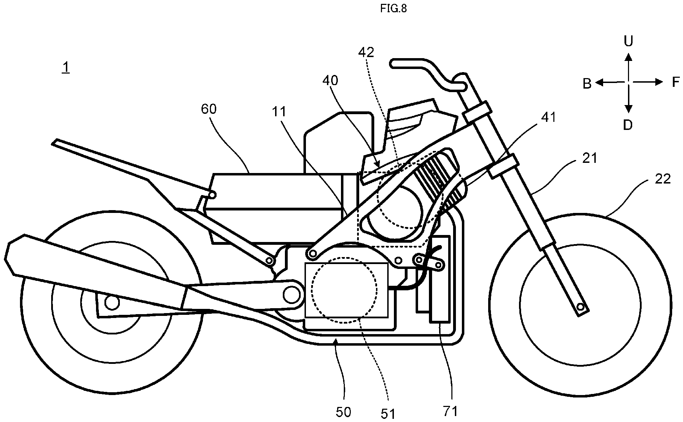

A not claimed eight embodiment. A not claimed eighth embodiment will be described. In the not claimed eighth embodiment, the electric power generation engine 41 of the electric power generation unit 40 according to any of the not claimed first to third embodiments is changed to an air-cooled engine. FIG. 8 is a right side view of a straddled vehicle 1 according to the not claimed eighth embodiment of the present teaching. FIG. 8 shows the straddled vehicle 1 from which a vehicle body covering is removed. Differences from any of the not claimed first to third embodiments will be described below.

The straddled vehicle 1 includes an electric power generation unit 40. The electric power generation unit 40 includes an electric power generation engine 41. The straddled vehicle 1 of this not claimed embodiment does not include an engine radiator. The electric power generation engine 41 is arranged at a position that can take impact of relative wind when the straddled vehicle 1 is in motion, and is directly cooled by the relative wind. That is, the electric power generation engine 41 is cooled with a natural air-cooling system.

A drive motor 51 of a motor unit 50 of the straddled vehicle 1 is supplied with electric power from at least either one of an electric power generator 42 or a battery 60. In some case with this configuration, the drive motor 51 of the straddled vehicle 1 may be supplied with electric power from the battery 60 alone. In this case, the electric power generation unit 40 of the straddled vehicle 1 is not continuously generating electric power. Thus, the electric power generation engine 41 of the straddled vehicle 1 is not continuously driven.

A target temperature in cooling the electric power generation engine 41 of the straddled vehicle 1 may be higher than a target temperature in cooling the drive motor 51. In this not claimed embodiment, therefore, the electric power generation engine 41 of the straddled vehicle 1, though it is of air-cooled type, can be continuously cooled down to the target temperature in cooling the electric power generation engine 41.

How a non-supported electric motor radiator 71 of the straddled vehicle 1 is arranged will now be described. Referring to FIG. 8, when the straddled vehicle 1 is viewed in the front-back direction FB, the non-supported electric motor radiator 71 is arranged in an edge portion located more rearward B than a front wheel 22, the edge portion constituting a front contour line of a frame 11. Furthermore, when the straddled vehicle 1 is viewed in the left-right direction LR, the non-supported electric motor radiator 71 is at least partially arranged between a rear contour line of the front wheel 22 and the front contour line of the frame 11. With this configuration, the non-supported electric motor radiator 71 is arranged with its cooling surface facing toward the forward direction (frontward direction F) of the straddled vehicle 1.

In this not claimed embodiment, a coolant from the non-supported electric motor radiator 71 cools the motor unit 50 and the electric power generator 42, and then returns to the non-supported electric motor radiator 71 again.

In this embodiment, the non-supported electric motor radiator 71 is the only radiator, and therefore the degree of freedom in arranging the radiator in the straddled vehicle is high. In addition, the number of parts of a cooling system can be reduced so that the cooling system can be simplified, because the number of radiators is one.

### (Variation)

In this not claimed embodiment, the electric power generation engine 41 is of air-cooled type. In a variation of this not claimed embodiment, a cooling fan is provided to a crankshaft end portion of the electric power generation engine 41. The electric power generation engine 41 is cooled by the cooling fan. That is, the electric power generation engine 41 is cooled with a forced air-cooling system. In another variation of the straddled vehicle 1 according to this not claimed embodiment, the non-supported electric motor radiator 71 is arranged farther in a first direction or a second direction of the vehicle body of the straddled vehicle 1 with respect to the left-right direction of the straddled vehicle 1, provided that the left-right direction is composed of the first direction and the second direction opposite to the first direction. To be more specific, the non-supported electric motor radiator 71 is arranged on a surface of the straddled vehicle 1 toward the right direction R or the left direction L in the left-right direction LR of the straddled vehicle 1.

### [Ninth Embodiment]

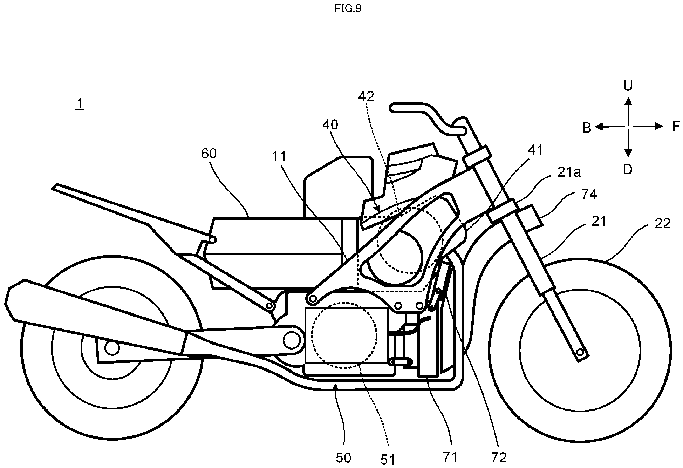

A ninth embodiment will be described. The ninth embodiment is an example in which a duct for introducing relative wind is installed in addition to the configuration of the not claimed fourth embodiment. FIG. 9 is a right side view of a straddled vehicle 1 according to the ninth embodiment of the present teaching. FIG. 9 shows the straddled vehicle 1 from which a vehicle body covering is removed. Differences from the fourth embodiment will be described below.

The straddled vehicle 1 includes a non-supported electric motor radiator 71. When the straddled vehicle 1 is viewed in the left-right direction LR, the non-supported electric motor radiator 71 is at least partially arranged between a rear contour line of a front wheel 22 and a front contour line of a frame 11.

The straddled vehicle 1 includes an engine radiator 72. When the straddled vehicle 1 is viewed in the left-right direction LR, the engine radiator 72 is at least partially arranged between the rear contour line of the front wheel 22 and the front contour line of the frame 11.

The straddled vehicle 1 includes a duct 74. The duct 74 is arranged such that air having flowed into a region below a joint portion 21a of a front fork 21 of the straddled vehicle 1 is guided to a cooling surface of the non-supported electric motor radiator 71.

In the straddled vehicle 1, the duct 74 is arranged in the above-described manner, which allows relative wind to be guided to the non-supported electric motor radiator 71 of the straddled vehicle 1.

### [Tenth Embodiment]

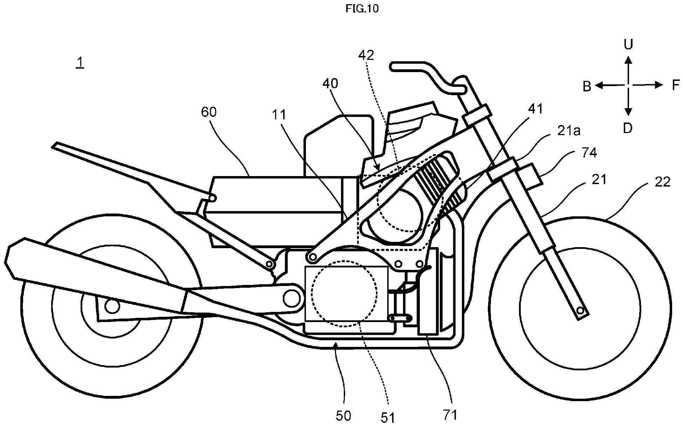

A tenth embodiment will be described. The tenth embodiment is an example in which a duct for introducing relative wind is installed in addition to the configuration of the not claimed eighth embodiment. FIG. 10 is a right side view of a straddled vehicle 1 according to the tenth embodiment of the present teaching. FIG. 10 shows the straddled vehicle 1 from which a vehicle body covering is removed. Differences from the eighth embodiment will be described below.

The straddled vehicle 1 includes a non-supported electric motor radiator 71. When the straddled vehicle 1 is viewed in the left-right direction LR, the non-supported electric motor radiator 71 is at least partially arranged between a rear contour line of a front wheel 22 and a front contour line of a frame 11.

The straddled vehicle 1 includes a duct 74. The duct 74 is arranged such that air having flowed into a region below a joint portion 21a of a front fork 21 of the straddled vehicle 1 is guided to a cooling surface of the non-supported electric motor radiator 71.

In the straddled vehicle 1, the duct 74 is arranged in the above-described manner, which allows relative wind to be guided to the non-supported electric motor radiator 71 of the straddled vehicle 1.

It is possible that the present teaching adopts the following configurations. The above-described embodiments provide supports for the following configurations.

(8) The series hybrid type straddled vehicle according to (1) is configured such that
the electric power generation engine is directly cooled by the relative wind.

In the series hybrid type straddled vehicle according to (8), the electric power generation engine is directly cooled by the relative wind. Thus, in the series hybrid type straddled vehicle according to (8), the electric power generation engine is cooled with a natural air-cooling system. Accordingly, in the series hybrid type straddled vehicle according to (8), a device for cooling the electric power generation engine can be downsized.

(9) The series hybrid type straddled vehicle according to (1) is configured such that
the electric power generation engine has a cooling fan.

In the series hybrid type straddled vehicle according to (9), the electric power generation engine is cooled by an air stream coming from the cooling fan. Thus, in the series hybrid type straddled vehicle according to (9), the electric power generation engine is cooled with a forced air-cooling system. Accordingly, in the series hybrid type straddled vehicle according to (9), the cooling can be implemented more effectively.

(10) The series hybrid type straddled vehicle according to (1) is configured such that
the non-supported electric motor radiator cools the electric power generation engine.

In the series hybrid type straddled vehicle according to (10), the non-supported electric motor radiator cools the electric power generation engine. Thus, in the series hybrid type straddled vehicle according to (10), the motor unit and the electric power generation engine can be cooled by the single non-supported electric motor radiator. Accordingly, in the series hybrid type straddled vehicle according to (10), a device for cooling the motor unit and the electric power generation engine can be designed compact.

(11) The series hybrid type straddled vehicle according to any one of (1) and (8) to (10) is configured such that
the non-supported electric motor radiator is arranged such that at least a part of the non-supported electric motor radiator is positioned between the rear contour line of the front wheel and the front contour line of the frame when the series hybrid type straddled vehicle is viewed in the vehicle width direction.

In the series hybrid type straddled vehicle according to (11), the non-supported electric motor radiator is arranged between the rear contour line of the front wheel and the front contour line of the frame when the series hybrid type straddled vehicle is viewed in the left-right direction. Accordingly, in the series hybrid type straddled vehicle according to (11), the non-supported electric motor radiator can be arranged at a position, in the frame, that can directly take impact of relative wind, so that the motor unit can be cooled efficiently.

(12) The series hybrid type straddled vehicle according to any one of (1) and (8) to (10) is configured such that
the non-supported electric motor radiator is arranged with its cooling surface facing toward a first direction or a second direction opposite to the first direction of the vehicle body of the series hybrid type straddled vehicle, the first direction and the second direction being included in the left-right direction of the series hybrid type straddled vehicle.

In the series hybrid type straddled vehicle according to (12), the radiator is arranged on a surface of the vehicle body of the series hybrid type straddled vehicle, the surface facing toward the right direction or the left direction in the left-right direction of the series hybrid type straddled vehicle. Thus, in the series hybrid type straddled vehicle according to (12), the radiator can be arranged at a position, in the vehicle body of the series hybrid type straddled vehicle, that can directly take impact of relative wind, so that the motor unit can be cooled efficiently.

(13) The series hybrid type straddled vehicle according to any one of (1) and (8) to (10) is configured such that
a duct provided in the series hybrid type straddled vehicle guides the relative wind to the radiator.

In the series hybrid type straddled vehicle according to (13), the duct provided in the series hybrid type straddled vehicle guides the relative wind to the radiator. Accordingly, in the series hybrid type straddled vehicle according to (13), the radiator can be arranged at a position, in the vehicle body of the series hybrid type straddled vehicle, that can directly take impact of relative wind, so that the motor unit can be cooled efficiently.

### Reference Signs List

- 1: straddled vehicle
- 11: frame
- 21: front fork
- 22: front wheel
- 31: rear arm
- 32: rear wheel
- 40: electric power generation unit
- 41: electric power generation engine
- 42: electric power generator
- 50: motor unit
- 51: drive motor
- 60: battery
- 71: non-supported electric motor radiator
- 72: engine radiator
- 73: radiator

## Claims

1. A series hybrid type straddled vehicle (1) comprising:
a frame (11);
an electric power generation unit (40) including an electric power generation engine (41) and an electric power generator (42), the electric power generation engine (41) being supported by the frame (11), the electric power generator (42) being driven by output from the electric power generation engine (41) to generate electric power;
a front wheel (22) rotatably supported by a front suspension (21) supported by the frame (11), the front wheel (22) being provided such that rotational power from the electric power generation engine (41) is not mechanically transmitted to the front wheel (22);
a rear wheel (32) rotatably supported by a rear arm (31) supported by the frame (11), the rear wheel (32) being rotatably provided such that rotational power from the electric power generation engine (41) is not mechanically transmitted to the rear wheel (32), the rear wheel (32) having its front end positioned more rearward than the rear end of the front wheel (22) with respect to a forward direction of the series hybrid type straddled vehicle (1);
a motor unit (50) supported by the frame (11), the front suspension (21), or the rear arm (31), the motor unit (50) including a drive motor (51) that is supplied with electric power generated by the electric power generator (42) to drive at least either one of the front wheel (22) or the rear wheel (32) as a driving wheel;
a control unit (52) including an inverter (521) that is configured to control electric power to be supplied from the electric power generator (42) to the drive motor (51);
an engine radiator (72) that is configured to cool the electric power generation engine (41), the engine radiator (72) being arranged at such a position that at least a part of the engine radiator (72) can take impact of the relative wind, the position being more rearward than the front end of the front wheel (22) with respect to the forward direction; and
a non-supported electric motor radiator (71) being arranged at such a position that at least a part of the non-supported electric motor radiator (71) can take impact of relative wind when the series hybrid type straddled vehicle is in motion, the position being more rearward than the front end of the front wheel (22) with respect to the forward direction, and **characterized in that** the
non-supported electric motor radiator (71) is configured to cool the inverter (521) and/or the drive motor (51) for driving the driving wheel without mechanically receiving rotational power from the electric power generation engine (41), the non-supported electric motor radiator (71) having a larger cooling area than that of the engine radiator (72).

2. The series hybrid type straddled vehicle (1) according to claim 1, further comprising
a battery (60), wherein
the control unit (52) includes a converter (522) that is configured to control electric power to be supplied from the electric power generator (42) to the battery (60) and/or the drive motor (51), and
the non-supported electric motor radiator (71) is configured to cool the electric power generator (42) and/or the converter (522).

3. The series hybrid type straddled vehicle (1) according to claim 1 or 2, wherein
the non-supported electric motor radiator (71) and the engine radiator (72) are arranged such that at least either one of at least a part of the non-supported electric motor radiator (71) or at least a part of the engine radiator (72) is positioned between a rear contour line of the front wheel (22) and a front contour line of the frame (11) when the series hybrid type straddled vehicle (1) is viewed in a left-right direction.

4. The series hybrid type straddled vehicle (1) according to any one of claims 1 to 3, wherein
the non-supported electric motor radiator (71) and the engine radiator (72) are arranged such that both a cooling surface (71a) included in the non-supported electric motor radiator (71) and a cooling surface (72a) included in the engine radiator (72) intersect with a plane where its normal extends in a front-back direction of the series hybrid type straddled vehicle (1).

5. The series hybrid type straddled vehicle (1) according to any one of claims 1 to 4, further comprising
a duct (74) that is configured to guide the relative wind to the non-supported electric motor radiator (71).

## Patentansprüche

1. Ein Spreizsitzfahrzeug (1) vom Serienhybridtyp, das folgende Merkmale aufweist:
einen Rahmen (11);
eine Elektrische-Leistung-Erzeugungseinheit (40), die eine Elektrische-Leistung-Erzeugungsmaschine (41) und einen Elektrische-Leistung-Erzeuger (42) umfasst, wobei die Elektrische-Leistung-Erzeugungsmaschine (41) von dem Rahmen (11) getragen ist, wobei der Elektrische-Leistung-Erzeuger (42) durch Ausgabe der Elektrische-Leistung-Erzeugungsmaschine (41) zum Erzeugen von elektrischer Leistung angetrieben ist;
ein Vorderrad (22), das drehbar von einer Vorderaufhängung (21) getragen wird, die von dem Rahmen (11) getragen wird, wobei das Vorderrad (22) derart vorgesehen ist, dass Rotationsleistung aus der Elektrische-Leistung-Erzeugungsmaschine (41) nicht mechanisch an das Vorderrad (22) übertragen wird;
ein Hinterrad (32), das drehbar von einem hinteren Arm (31) getragen wird, der von dem Rahmen (11) getragen wird, wobei das Hinterrad (32) derart drehbar vorgesehen ist, dass Rotationsleistung von der Elektrische-Leistung-Erzeugungsmaschine (41) nicht mechanisch an das Hinterrad (32) übertragen wird, wobei das Vorderende des Hinterrads (32) in Bezug auf eine Vorwärtsrichtung des Spreizsitzfahrzeugs (1) vom Serienhybridtyp weiter hinten positioniert ist als das Hinterende des Vorderrads (22);
eine Motoreinheit (50), die von dem Rahmen (11), der Vorderaufhängung (21) oder dem hinteren Arm (31) getragen wird, wobei die Motoreinheit (50) einen Antriebsmotor (51) umfasst, der mit von dem Elektrische-Leistung-Erzeuger (42) erzeugter elektrischer Leistung versorgt wird, um zumindest entweder das Vorderrad (22) oder das Hinterrad (32) als Antriebsrad anzutreiben;
eine Steuereinheit (52), die einen Inverter (521) umfasst, die dazu ausgebildet ist, elektrische Leistung zu steuern, die von dem Elektrische-Leistung-Erzeuger (42) an den Antriebsmotor (51) zu liefern ist;
ein Maschinenstrahler (72), der dazu ausgebildet ist, die Elektrische-Leistung-Erzeugungsmaschine (41) zu kühlen, wobei der Maschinenstrahler (72) an einer solchen Position angeordnet ist, dass zumindest ein Teil des Maschinenstrahlers (72) einen Stoß des relativen Windes aufnehmen kann, wobei sich die Position in Bezug auf die Vorwärtsrichtung weiter hinten befindet als das Vorderende des Vorderrads (22); und
einen nicht getragenen Elektromotorstrahler (71), der an einer solchen Position angeordnet ist, dass zumindest ein Teil des nicht getragenen Elektromotorstrahlers (71) einen Stoß des relativen Windes aufnehmen kann, wenn das Spreizsitzfahrzeug vom Serienhybridtyp in Bewegung ist, wobei sich die Position in Bezug auf die Vorwärtsrichtung weiter hinten befindet als das Vorderende des Vorderrads (22), **dadurch gekennzeichnet, dass** der
nicht getragene Elektromotorstrahler (71) dazu ausgebildet ist, den Inverter (521) und/oder den Antriebsmotor (51) zum Antreiben des Antriebsrads zu kühlen, ohne auf mechanische Weise Rotationsleistung von der Elektrische-Leistung-Erzeugungsmaschine (41) zu erhalten, wobei der nicht getragene Elektromotorstrahler (71) einen größeren Kühlbereich als den des Maschinenstrahlers (72) aufweist.

2. Das Spreizsitzfahrzeug (1) vom Serienhybridtyp gemäß Anspruch 1, das ferner folgende Merkmale aufweist:
eine Batterie (60), wobei
die Steuereinheit (52) einen Wandler (522) umfasst, der dazu ausgebildet ist, elektrische Leistung zu steuern, der von dem Elektrische-Leistung-Erzeuger (42) an die Batterie (60) und/oder den Antriebsmotor (51) zu liefern ist, und
der nicht getragene Elektromotorstrahler (71) dazu ausgebildet ist, den Elektrische-Leistung-Erzeuger (42) und/oder den Wandler (522) zu kühlen.

3. Das Spreizsitzfahrzeug (1) vom Serienhybridtyp gemäß Anspruch 1 oder 2, bei dem
der nicht getragene Elektrische Maschinenstrahler (71) und der Maschinenstrahler (72) derart angeordnet sind, dass zumindest eines zumindest eines Teils des nicht getragenen Elektrischen Maschinenstrahlers (71) oder zumindest eines Teils des Maschinenstrahlers (72) zwischen einer hinteren Konturlinie des Vorderrads (22) und einer vorderen Konturlinie des Rahmens (11) positioniert ist, wenn das Serienhybrid-Spreizsitzfahrzeug (1) in einer Links-Rechts-Richtung betrachtet wird.

4. Das Spreizsitzfahrzeug (1) vom Serienhybridtyp gemäß einem der Ansprüche 1 bis 3, bei dem
der nicht getragene Elektrische Maschinenstrahler (71) und der Maschinenstrahler (72) derart angeordnet sind, dass sowohl eine Kühlfläche (71a), die von dem nicht getragenen Elektrischen Maschinenstrahler (71) umfasst ist, und eine Kühlfläche (72a), die von dem Maschinenstrahler (72) umfasst ist, eine Ebene schneiden, wo sich die Normale derselben in einer Vorne-Hinten-Richtung des Spreizsitzfahrzeugs (1) vom Serienhybridtyp erstreckt.

5. Das Spreizsitzfahrzeug (1) vom Serienhybridtyp gemäß einem der Ansprüche 1 bis 4, das ferner folgendes Merkmal aufweist:
einen Kanal (74), der dazu ausgebildet ist, den relativen Wind zu dem nicht getragenen Elektrischen Maschinenstrahler (71) zu führen.

## Revendications

1. Véhicule à selle de type hybride en série (1), comprenant:
un châssis (11);
une unité de génération d'énergie électrique (40) comportant un moteur de génération d'énergie électrique (41) et un générateur d'énergie électrique (42), le moteur de génération d'énergie électrique (41) étant supporté par le châssis (11), le générateur d'énergie électrique (42) étant entraîné par la sortie du moteur de génération d'énergie électrique (41) pour générer de l'énergie électrique;
une roue avant (22) supportée en rotation par une suspension avant (21) supportée par le châssis (11), la roue avant (22) étant prévue de sorte que la puissance de rotation provenant du moteur de génération d'énergie électrique (41) ne soit pas transmise de manière mécanique à la roue avant (22);
une roue arrière (32) supportée en rotation par un bras arrière (31) supporté par le châssis (11), la roue arrière (32) étant prévue de manière rotative de sorte que la puissance de rotation provenant du moteur de génération d'énergie électrique (41) ne soit pas transmise de manière mécanique à la roue arrière (32), la roue arrière (32) présentant son extrémité avant positionnée plus en arrière que l'extrémité arrière de la roue avant (22) par rapport à une direction vers l'avant du véhicule à selle de type hybride en série (1);
une unité de moteur (50) supportée par le châssis (11), la suspension avant (21) ou le bras arrière (31), l'unité de moteur (50) comportant un moteur d'entraînement (51) qui est alimenté en énergie électrique générée par le générateur d'énergie électrique (42) pour entraîner au moins l'une ou l'autre parmi la roue avant (22) ou la roue arrière (32) comme roue motrice;
une unité de commande (52) comportant un onduleur (521) qui est configuré pour commander l'énergie électrique à fournir du générateur d'énergie électrique (42) au moteur d'entraînement (51);
un radiateur de moteur (72) qui est configuré pour refroidir le moteur de génération d'énergie électrique (41), le radiateur de moteur (72) étant disposé à une position telle qu'au moins une partie du radiateur de moteur (72) puisse subir l'impact du vent relatif, la position étant plus en arrière que l'extrémité avant de la roue avant (22) par rapport à la direction vers l'avant; et
un radiateur de moteur électrique non supporté (71) qui est disposé à une position telle qu'au moins une partie du radiateur de moteur électrique non supporté (71) puisse subir l'impact du vent relatif lorsque le véhicule à selle de type hybride en série est en mouvement, la position étant plus en arrière que l'extrémité avant de la roue avant (22) par rapport à la direction vers l'avant,
et **caractérisé par le fait que** le radiateur de moteur électrique non supporté (71) est configuré pour refroidir l'onduleur (521) et/ou le moteur d'entraînement (51) pour entraîner la roue motrice sans recevoir de manière mécanique de la puissance de rotation du moteur de génération de courant électrique (41), le radiateur de moteur électrique non supporté (71) présentant une zone de refroidissement plus grande que celle du radiateur de moteur (72).

2. Véhicule à selle de type hybride en série (1) selon la revendication 1, comprenant par ailleurs
une batterie (60),
dans lequel
l'unité de commande (52) comporte un convertisseur (522) qui est configuré pour commander l'énergie électrique à fournir du générateur d'énergie électrique (42) à la batterie (60) et/ou au moteur d'entraînement (51), et
le radiateur de moteur électrique non supporté (71) est configuré pour refroidir le générateur d'énergie électrique (42) et/ou le convertisseur (522).

3. Véhicule à selle de type hybride en série (1) selon la revendication 1 ou 2, dans lequel
le radiateur de moteur électrique non supporté (71) et le radiateur de moteur (72) sont disposés de sorte qu'au moins l'une ou l'autre parmi au moins une partie du radiateur de moteur électrique non supporté (71) ou au moins une partie du radiateur de moteur (72) soit positionnée entre une ligne de contour arrière de la roue avant (22) et une ligne de contour avant du châssis (11) lorsque le véhicule à selle de type hybride en série (1) est vu dans une direction gauche-droite.

4. Véhicule à selle de type hybride en série (1) selon l'une quelconque des revendications 1 à 3, dans lequel
le radiateur de moteur électrique non supporté (71) et le radiateur de moteur (72) sont disposés de sorte que tant une surface de refroidissement (71a) incluse dans le radiateur de moteur électrique non supporté (71) qu'une surface de refroidissement (72a) incluse dans le radiateur de moteur (72) viennent en intersection avec un plan où sa normale s'étend dans une direction avant-arrière du véhicule à selle de type hybride en série (1).

5. Véhicule à selle de type hybride en série (1) selon l'une quelconque des revendications 1 à 4, comprenant par ailleurs
un conduit (74) qui est configuré pour guider le vent relatif vers le radiateur de moteur électrique non supporté (71).
